# FASCICULE DE BREVET EUROPEEN

(11) **EP 3 241 378 B1**
(45) Date de publication et mention de la délivrance du brevet: **11.09.2024**
(21) Numéro de dépôt: 15820175.6
(22) Date de dépôt: 29.12.2015
(51) Int. Cl.: H04W 16/14, H04W 72/12, H04W 72/23

(54) **STATION DE BASE D'UN RÉSEAU CELLULAIRE, PROCÉDÉ DE TRAITEMENT DANS UNE TELLE STATION DE BASE ET TERMINAL UTILISATEUR ASSOCIÉ**
BASISSTATION EINES ZELLULAREN NETZWERKS, VERFAHREN ZUR VERARBEITUNG IN SOLCH EINER BASISSTATION UND ZUGEHÖRIGES BENUTZERENDGERÄT
BASE STATION OF A CELLULAR NETWORK, METHOD OF PROCESSING IN SUCH A BASE STATION AND ASSOCIATED USER TERMINAL

(30) Priorité: 29.12.2014 FR 1403018
(43) Date de publication de la demande: 08.11.2017
(73) Titulaire: Thales, 92400 Courbevoie (FR)
(72) Inventeur: SOULIE, Antoine, 92622 Gennevilliers Cedex (FR); TONNERRE, Arnaud, 92622 Gennevilliers Cedex (FR)
(74) Mandataire: Lavoix
(86) Numéro de dépôt international: PCT/EP2015/081352
(87) Numéro de publication internationale: WO 2016/107872

(56) Documents cités:
- EP-A2- 2 254 382
- WO-A1-2013/052805
- WO-A2-2014/113600
- US-A1- 2013 095 789
- US-A1- 2013 137 423
- SHABBIR AHMED ET AL: "Mitigation of Reverse Intermodulation Products at Colocated Base Stations", IEEE TRANSACTIONS ON CIRCUITS AND SYSTEMS I: REGULAR PAPERS, IEEE, US, vol. 60, no. 6, 1 June 2013 (2013-06-01), pages 1608 - 1620, XP011511190, ISSN: 1549-8328, DOI: 10.1109/TCSI.2012.2221219
- ALMEIDA ERIKA ET AL: "Enabling LTE/WiFi coexistence by LTE blank subframe allocation", 2013 IEEE INTERNATIONAL CONFERENCE ON COMMUNICATIONS (ICC), IEEE, 9 June 2013 (2013-06-09), pages 5083 - 5088, XP032522656, ISSN: 1550-3607, [retrieved on 20131104], DOI: 10.1109/ICC.2013.6655388

## Description

La présente invention concerne le domaine des radiocommunications.

Plus spécifiquement, l'invention concerne une station de base d'un réseau cellulaire comprenant des moyens d'émission et de réception radiofréquence et adaptée pour établir, via lesdits moyens d'émission/réception radiofréquence, des connexions sur des canaux radiofréquences montants et descendants, en mettant en oeuvre un premier protocole de communication radio, avec des terminaux utilisateurs localisés au sein d'une cellule radio associée à la station de base ;
ladite station de base étant adaptée pour échanger, conformément au premier protocole radio, des trames de données avec des terminaux utilisateurs sur des canaux radio descendants et/ou montants, après y avoir inséré au moins une sous-trame vide, et ladite station de base étant adaptée pour synchroniser l'occurrence desdites sous-trames vides avec celle des sous-trames vides insérées par les autres stations de base du réseau cellulaire, et pour pendant l'occurrence des sous-trames vides, communiquer, selon un deuxième protocole radio, via lesdits moyens d'émission/réception, avec au moins une station de base voisine, ledit deuxième protocole mis en oeuvre par ladite station de base étant distinct du premier protocole radio mis en oeuvre par ladite station de base ; le premier protocole radio est un protocole de type LTE, et les sous-trames vides sont des sous-trames de type « Almost Blanked Subframe » définies par configuration de la stations de base ; et le deuxième protocole est un protocole de type MANET.

Une telle station de base est notamment utilisée dans les réseaux cellulaires mettant en oeuvre le standard LTE (« Long Term Evolution »), dit encore 4G, à partir de la publication 10 de la norme 3 GPP correspondante (« 3GPP Release 10 »).

Par exemple, l'article de Almeida et al., intitulé « Enabling LTE/WiFi coexistence by LTE blank subframe allocation », 2013 IEEE INTERNATIONAL CONFERENCE ON COMMUNICATIONS (ICC), IEEE, 9 juin 2013, décrit une méthode permettant de faire coexister des communications de type LTE avec des communications de type WiFi.

Il existe par ailleurs un besoin dans le domaine des télécommunications tactiques, par exemple dans le domaine des télécommunications aéronautiques militaires ou civiles, de disposer de moyens de télécommunication haut débit, mobiles, dits mobiles ad-hoc capables d'assurer localement des services de communication entre des serveurs, ou encore entre des serveurs et des terminaux utilisateurs tels que des smartphones.

De façon connue, les réseaux mobiles ad-hoc sont des réseaux sans fil de noeuds d"émission/réception radiofréquence aptes à s'organiser entre eux, sans infrastructure définie préalablement, et sont nommés réseaux MANET.

Aujourd'hui, les solutions ad hoc civiles sont principalement basées sur la technologie WiFi (standards IEEE 802.11b, g) qui impose intrinsèquement aux applications considérées des limitations en termes de QoS, latence et débit qui sont inhérentes à l'utilisation du protocole d'accès CSMA/CA. De plus, on constate une baisse importante du débit agrégé lorsque plusieurs noeuds communiquent sur le canal.

En ce qui concerne les réseaux cellulaires 3G/4G, de nombreux travaux ont été réalisés sur les stations relais (standards IEEE 802.16j et 802.16m, 3GPP release 8) permettant de relayer les données entre la station de base et les stations abonnées. La démarche associée étant d'optimiser les déploiements de réseaux de télécommunication, ces stations relais ont été conçues pour un fonctionnement fixe ou nomade, sans possibilité de générer ou recevoir des données au niveau de ces équipements ou de transmettre des données entre deux terminaux utilisateur sans passer par la station de base. En outre ces équipements ne peuvent être utilisés par des abonnés du réseau pour communiquer.

Il est également connu des solutions dans lesquelles la station de base et le terminal utilisateur comporte chacun un module radio et un module de traitement associé pour la communication dans le réseau cellulaire et un autre module radio et un autre module de traitement associé pour la communication ad-hoc. Ces solutions engendrent une augmentation du volume des moyens techniques nécessaires.

A cet effet, suivant un premier aspect, l'invention propose une station de base selon la revendication 1.

La présente description propose ainsi la fourniture d'un réseau cellulaire, pas conforme à l'invention telle que revendiquée, selon un premier protocole, par exemple le protocole radio LTE et d'un réseau selon un deuxième protocole, par exemple un protocole radio MANET, qui permet d'utiliser le même équipement radiofréquence de la station de base pour communiquer selon le protocole LTE avec les terminaux utilisateurs et assurer l'interopérabilité avec les solutions au standard 3GPP (notamment la fonction de mobilité permettant à un terminal de changer de station de base de raccordement est maintenue), et pour assurer la mise en réseau MANET des noeuds MANET comprenant au moins les stations de base.

Dans des modes de réalisation, la station de base suivant l'invention est selon l'une quelconque des revendications 2 à 5.

Suivant un deuxième aspect, la présente invention propose un procédé de traitement selon la revendication 6.

Suivant un troisième aspect, la présente invention propose un terminal utilisateur selon la revendication 7.

Dans un mode de réalisation, le terminal utilisateur suivant l'invention est selon la revendication 8.

Ces caractéristiques et avantages de l'invention apparaîtront à la lecture de la description qui va suivre, donnée uniquement à titre d'exemple, et faite en référence aux dessins annexés, sur lesquels :
- la figure 1 représente un réseau comportant des stations de base dans un mode de réalisation de l'invention ;
- la figure 2 représente une trame LTE ;
- la figure 3 représente un module de traitement d'une station de base dans un mode de mise en oeuvre de l'invention ;
- la figure 4 représente un module de traitement d'un terminal utilisateur dans un mode de mise en oeuvre de l'invention.

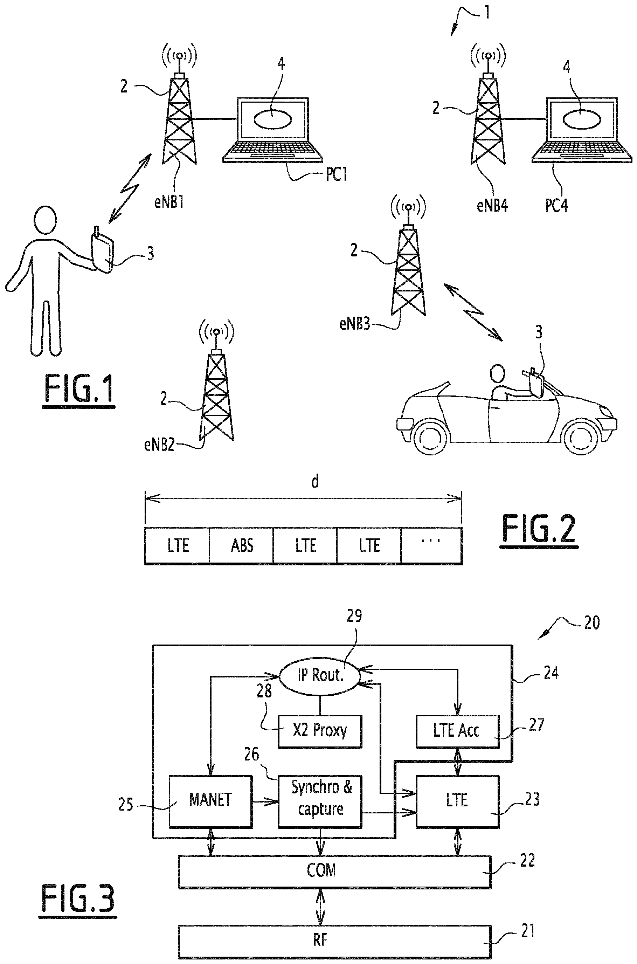

La figure 1 représente un réseau de télécommunications cellulaires LTE 1 comprenant des stations de base 2, encore nommées eNodeB.

Dans le cas des applications de télécommunication tactique, certaines au moins de ces stations de base 2 sont mobiles (par exemple elles sont embarquées dans des véhicules).

Une station de base 2 comprend au moins une antenne radio fréquence adaptée pour émettre des signaux radiofréquences au sein d'une zone géographique qui est associée à la station de base 2, et est nommée ci-après cellule radio, et pour recevoir des signaux radiofréquences.

Chacune de ces stations de base 2 est adaptée pour mettre en oeuvre, conformément au protocole LTE à partir de sa publication 10 (Release 10), des communications radio avec des terminaux utilisateurs 3 localisés au sein de sa cellule radio.

Des postes de travail 4 tels que serveurs d'appel, ou ordinateurs, sont en outre connectés localement à la station de base 2 dans certains modes de réalisation, par exemple par câble.

Un ensemble de N sous-porteuses orthogonales entre elles est affecté à chaque station de base 2 pour mettre en oeuvre des radiocommunications LTE ascendantes (d'un terminal utilisateur 3 vers la station de base 2) et descendantes (de la station de base 2 à un terminal utilisateur 3). Typiquement, N peut être égal à 12 à un instant donné. La station de base 2 est adaptée pour effectuer un codage OFDMA (en anglais « Orthogonal Frequency Division Multiple Access ») des données numériques à transmettre dans le cadre des communications descendantes LTE, selon lequel les données codées, nommées symboles OFDM, sont réparties sur des sous-porteuses orthogonales entre elles.

Comme il est connu, les trames LTE émises par une station de base 2 sont d'une durée d, typiquement d est égal à 10 millisecondes (ms). Elles sont divisées en 10 sous-trames, chaque sous-trame de longueur 1,0 ms. Parmi ces sous-trames figurent des sous-trames LTE. Chaque sous-trame LTE est divisée en deux intervalles (« slot »), chacun de 0,5 ms. Un slot est composé de 6 ou 7 symboles OFDM successifs.

En LTE, l'espace temps/fréquence est divisé en PRB (Physical Resource Blocks). Chaque PRB, utilise par exemple 180 KHz (dans le cas N=12 sous-porteuses consécutives de 15 KHz) pour un intervalle de temps (0,5 ms). Les ressources s'allouent par paire de PRB, les PRB d'une paire étant alloués dans deux intervalles de temps consécutifs d'une même sous-trame. Ce qui en pratique signifie que l'unité d'allocation dure 1ms.

Le standard LTE à compter de sa publication n°10 introduit des sous-trames vides de trafic dans la trame LTE, afin de réduire l'impact des interférences de cellules principales (« umbrella cells ») qui sont sur des microcellules ponctuelles, dans les réseaux dits hétérogènes (NetHet). Ce nouveau type de sous-trame LTE est nommé trame ABS (en anglais « Almost Blanked Subframe ».

La figure 2 est une vue d'une trame LTE émise par une station de base 2 et comportant des sous-trames LTE et au moins une sous-trame ABS. Cette sous-trame vide ABS est imposée par la station de base sur toutes ses porteuses et positionnée dans la trame à un emplacement configurable.

La station de base impose en outre aux terminaux utilisateurs en communication avec elle de ne pas émettre via LTE pendant cette sous-trame ABS.

L'invention propose d'exploiter ces trames vides ABS pour mettre en place entre les stations de base LTE un réseau MANET par l'intermédiaire d'un protocole de signalisation de type MANET distinct de celui du LTE mais partageant la même trame temporelle, utilisant le même étage radiofréquence et pouvant utiliser la même couche PHY (couche 1 du modèle OSI).

Le réseau MANET est mis en oeuvre dans le mode de réalisation décrit ci-dessous sur un ensemble de sous-porteuse(s) nommée(s) F_{MANET} Cet ensemble de sous-porteuse(s) F_{MANET} est celui qui est utilisé par l'ensemble des stations de base 2 pour la communication MANET. Ces sous-porteuses ont dans un mode de réalisation la même largeur de bande (i.e. 15 Khz). L'ensemble Fₘₐₙₑₜ peut être identique à l'ensemble des sous porteuses de la forme d'onde LTE, ou présenter une intersection non nulle ou une intersection nulle avec l'ensemble des sous-porteuses de la forme d'onde LTE.

Dans un mode de réalisation de l'invention, une station de base 2 comprend ainsi un bloc de traitement 20 représenté en figure 3 adapté pour traiter des signaux radiofréquence reçus par l'antenne et pour traiter des signaux avant de les fournir à l'antenne en vue de leur émission radiofréquence.

Le bloc de traitement 20 d'une station de base 2 comprend une unité radiofréquence RF 21, un commutateur 22, un bloc LTE 23 et un module de traitement 24.

Le module de traitement 24 comprend un routeur IP 29, une interface d'accès LTE 27, un bloc X2 28, un bloc de synchronisation 26, un bloc LTE 23 et un bloc MANET 25.

Le bloc LTE 23, l'interface d'accès LTE 27, le bloc X2 28 et le bloc MANET 25 sont identifiés chacun par une adresse IP respective.

### Unité RF

L'unité RF 21 est d'une part interfacée à l'antenne et d'autre part au commutateur 22, et comprend l'étage radiofréquence de la station de base, des convertisseurs analogiques/numériques et numériques/analogiques et des amplificateurs. L'unité RF 21 est ainsi adaptée pour fournir à l'antenne les données radiofréquences à émettre LTE ou MANET qui lui sont fournies par le commutateur 22, et pour fournir au commutateur 22 le signal utile reçu. De façon connue, l'unité RF 21 reçoit le signal radiofréquence fourni par l'antenne, l'amplifie, le filtre et descend le signal utile de la porteuse radiofréquence en un signal en bande de base, le numérise, puis le fournit au commutateur 22. L'unité RF 21 reçoit un signal utile fourni par le commutateur 22 sous forme numérique, le dé-numérise, le module avec une porteuse radiofréquence et le délivre à l'antenne.

### Commutateur

Le commutateur 22, par exemple un commutateur gigabit ethernet, est adapté pour être piloté par le bloc de synchronisation 26 du bloc MANET 24 de manière à interfacer le bloc MANET 24 et le l'unité RF 21 pendant la période correspondant à la réception d'une sous-trame ABS allouée aux communications MANET et à interfacer le bloc LTE 23 et l'unité RF 21 pendant une période correspondant à la réception d'une sous-trame LTE ou d'une sous-trame ABS non allouée aux communications MANET.

### Bloc LTE

Le bloc LTE 23 est adapté pour mettre en oeuvre la partie du protocole LTE propre aux stations de base, pour exécuter le traitement propre à la forme d'onde LTE, notamment les traitements relatifs aux couches d'accès et de routage LTE (couches 1, 2 et 3 du modèle OSI) en émission et en réception, comprenant la modulation/démodulation LTE et le codage/décodage LTE, pour préparer et commander à l'unité RF 21 la transmission des sous-trames LTE et des sous-trames ABS non allouées aux communications MANET, conformément à la configuration fixée d'une trame LTE, et pour traiter des sous-trames LTE et des sous-trames ABS non allouées aux communications MANET reçues par l'antenne et transmises par l'interface RF 21 quand le commutateur 22 interface le bloc LTE 23 et l'unité RF 21.

### Interface d'accès LTE

Dans le mode de réalisation considéré, les éléments de coeur de réseau « EPC » (en anglais « *Evolved Packet Core* ») d'un réseau LTE, comprenant des équipements tels que MME ou SGW et permettant notamment de pouvoir transporter les communications reçues par une station de base 2 jusqu'à une autre station de base 2, sont intégrés dans l'interface d'accès LTE 27.

L'interface d'accès LTE 27 est notamment adaptée pour, sur réception de paquets en provenance du réseau MANET qui lui ont été remis par le routeur IP 29, les traiter puis fournir les paquets une fois traités, via le routeur IP 29, au bloc LTE 23.

### Bloc MANET

Le bloc MANET 25 est adapté pour exécuter le traitement propre à la forme d'onde MANET retenue, notamment les traitements relatifs aux couches d'accès et de routage (couches 1 2 et 3 du modèle OSI) en émission et en réception, comprenant la modulation/démodulation MANET et le codage/décodage MANET. Il est adapté pour préparer et commander à l'unité RF 21 la transmission des données pendant la période des sous-trames ABS allouées aux communications MANET, conformément à la configuration fixée d'une trame LTE, et pour traiter les données MANET reçues par l'antenne et transmises par l'interface RF 21 quand le commutateur 22 interface entre eux le bloc MANET 25 et l'unité RF 21.

Le bloc MANET 25 est adapté pour, après avoir démodulé et décodé des paquets de données MANET à partir du signal utile fourni par le commutateur 22, les fournir au routeur IP 29.

Le bloc MANET 25 est en outre adapté pour recevoir chacun des paquets de données MANET qui lui sont fournies par le routeur IP 29 avec l'adresse IP du destinataire du paquet et l'adresse IP du noeud MANET permettant de joindre ledit destinataire et qui en est le plus proche selon la topologie IP (couche L3 OSI) , et pour moduler et coder selon la forme d'onde MANET en déterminant et indiquant l'adresse MANET (L2 OSI) du noeud voisin relais et pour fournir les données résultantes au commutateur 22.

Il existe plusieurs formes d'onde MANET connues. Le protocole MANET utilisé selon l'invention est par exemple choisi parmi :
- le protocole MAC de type CSMA/CA associé à une couche réseau IP standard permet d'apporter une solution assez simple principalement pour du relayage au niveau des équipements utilisateur ;
- toute forme d'onde ad hoc avec garantie d'accès, par exemple ESSOR ;
- une forme d'onde de type cellulaire dont le bloc MANET utiliserait la partie normalement dédiée au terminal utilisateur d'un protocole de radiocommunication cellulaire.

### Bloc de synchronisation

Le bloc de synchronisation 26 est adapté pour piloter le commutateur 22 de façon à interfacer l'unité RF 21 au bloc LTE 23 pendant les périodes des trames LTE correspondant aux sous-trames LTE et aux sous-trames ABS non allouées aux communications MANET et à interfacer l'unité RF 21 au bloc MANET 24 pendant les périodes des trames LTE correspondant aux sous-trames ABS allouées aux communications MANET.

L'apprentissage de ces périodes respectives est effectué par le bloc de synchronisation 26 dans une phase préalable décrite plus bas.

### Routeur IP

Le routeur IP 29 comporte une table de données définissant la topologie L3 des adresses IP du réseau MANET et des réseaux joignables depuis le réseau MANET, et le plan d'adressage IP L3 du réseau LTE. Il comporte également une table de correspondance d'adresses IP indiquant pour chacune des stations de base 2 du réseau 1, l'adresse IP du bloc LTE de la station de base 2 en correspondance de l'adresse IP de l'interface d'accès LTE 27 de cette station de base 2, en correspondance de l'adresse IP du proxy X2 28 et en correspondance également de l'adresse IP du bloc MANET 25 de cette station de base 2

Le routeur IP 29 est adapté pour recevoir des paquets de données MANET qui lui sont fournis par le bloc MANET 25, des paquets de données fournis par le bloc d'accès LTE 27, par le bloc X2 28 ou encore par le bloc LTE 23, et pour déterminer, en fonction de l'adresse IP de destinataire indiquée par le paquet, s'il convient d'orienter un paquet :
- vers l'interface d'accès LTE 27 pour transmission vers l'EPC LTE, ou
- vers le bloc LTE 23 pour émission radiofréquence LTE vers les terminaux LTE, ou
- vers le bloc MANET 25 pour émission radiofréquence vers le réseau de télécommunication MANET, ou
- vers le bloc X2 28 ou
- vers un poste de travail 4 local à la station de base 2 dont fait partie le routeur IP 29.

### Bloc X2

Le bloc X2 28 est un équipement de type proxy adapté pour mettre en oeuvre, entre stations de base 2, les fonctionsdu protocole X2 de la norme LTE , mais via le réseau MANET comprenant les stations de base 2 maillées en réseau ad-hoc selon l'invention, dans le cadre d'échanges point à multipoint (versus point à point dans le cas standard LTE).

Les échanges entre le proxy X2 28 et le bloc LTE 23 sont conformes au protocole X2 usuel.

Le bloc X2 28 est adapté pour détecter, sur la base des échanges MANET mis en oeuvre via le bloc MANET 25, au moins un événement : un tel événement est par exemple l'apparition ou la disparition d'une telle station de base, une modification ou une demande de modification d'au moins une sous-porteuse utilisée par un canal LTE ascendant ou descendant d'une telle station de base, et pour diffuser l'indication de cet événement via l'émission de données MANET vers les stations de base voisines.

Le proxy X2 28 est notamment adapté, par l'intermédiaire d'échanges qu'il met en oeuvre via le réseau MANET avec les proxy X2 des stations de base voisines, pour partager dynamiquement le spectre entre stations voisines, et pour gérer la mobilité des terminaux et en particulier pour déterminer, suite à ces échanges via MANET, les informations suivantes qui seront ensuite exploitées dans le réseau LTE :
- définition, suite à négociation avec les blocs X2 des stations de base voisines de manière à ce que les sous-porteuses affectées à une station de base LTE soient orthogonales à celles utilisées par les stations voisines, de l'ensemble des sous-porteuses LTE de la station de base 2, puis fourniture au bloc LTE 23 ;
- transmission du contexte de terminal utilisateur vers le bloc proxy d'une station de base voisine lorsque le terminal utilisateur effectue un transfert depuis la station de base vers la station de base voisine, et inversement réception du contexte de terminal utilisateur envoyé par le bloc proxy d'une station de base voisine lorsque le terminal utilisateur effectue un transfert depuis la station de base voisine vers la station de base considérée, et fourniture au bloc LTE 23.

Dans le cas d'un terminal utilisateur LTE effectuant un changement de cellule depuis une station de base LTE n°1 vers une station de base LTE n°2, le contexte du terminal est fourni par le bloc LTE 23 au bloc X2 28 de la station de base n°1 d'où vient le terminal utilisateur, puis transmis via MANET au bloc X2 de la station de base n°2.

Il est en effet fortement souhaitable que les stations de bases se partagent dynamiquement le spectre en fonction de leurs besoins locaux. Un partage statique du spectre est possible mais aboutit à un usage très sous-optimal du spectre. Si le protocole X2 est dans l'art antérieur établi au démarrage d'une station de base avec son voisinage réseau, appris par collaboration avec un centre de gestion sur la base des mesures radio effectuées, dans le cas présent, le réseau étant mobile, il est préférable que l'apprentissage des eNodeB adjacents s'effectue via le réseau MANET <comment s'effectue-t-il ?>

Le proxy X2 28 comporte une liste des adresses IP de tous les proxys X2 des stations de base du réseau et détermine, via les échanges MANET avec les stations de base voisines, quels sont les proxys des stations de base voisines..

### Configuration préalable

Dans une phase de configuration préalable du réseau LTE comprenant la configuration des sous-trames LTE vides, la position d'une ou de plusieurs sous-trames vides est prédéfinie de manière identique pour l'ensemble des stations de base 2 du réseau 1 et, selon l'invention, parmi ces sous-trames vides, une ou plusieurs sont réservées aux communications MANET.

On notera que les sous-trames réservées aux communications MANET peuvent être insérées dans les parties de trames LTE correspondant à la communication descendante LTE ou montante LTE.

Par exemple, chaque sous-trame n°3 des trames LTE est une sous-trame sur laquelle il est imposé un vide de transmission de données LTE tant en provenance des stations de base 2 que des terminaux utilisateurs 3 communicant avec ces stations via le réseau LTE et qui est réservée aux communications MANET.

La configuration de la trame LTE comprenant cette position d'une ou de plusieurs sous-trames ABS allouées au transit MANET est prédéfinie de manière identique pour l'ensemble des stations de base 2 du réseau 1 et est enregistrée par le bloc de synchronisation 26 de chaque station de base 2 et est transmise également au bloc LTE 23 et au bloc MANET 25.

Puis une étape de génération de la table de correspondance d'adresses IP a lieu. Cette table est enregistrée dans le routeur IP 29 de chaque station de base 2.

### Synchronisation

Les deux formes d'onde MANET et LTE doivent être synchronisées, au sein d'une même station de base 2 et aussi entre stations de base 2, afin de partager sans collision les allocations temporelles de trames ABS.

La forme d'onde MANET apporte la synchronisation globale à l'ensemble des stations de base 2 et donc aussi, indirectement (car via les blocs LTE 23) pour tous les terminaux utilisateurs LTE 3 du réseau 1.

Le mécanisme de synchronisation par la forme d'onde MANET s'appuie par exemple sur la transmission périodique de balises dans les données MANET transmises sur l'ensemble de ressources fréquentielles F_{MANET} pendant les sous-trames ABS, qui sont exploitées par le bloc de synchronisation 26, via le bloc MANET 25. Le bloc de synchronisation 26 pilote le commutateur 22 en fonction de la synchronisation indiquée par ces balises. Des commandes de synchronisation successives, déterminées en fonction de es balises successives sont en outre transmises au niveau de chaque station de base 2 par le bloc de synchronisation 26 au module LTE 23 qui asservit la préparation et l'émission des trames LTE en fonction de ces commandes successives de synchronisation

Les trames LTE sont donc émises en même temps par les différentes stations de base 2. Les sous-trames ABS sont ainsi également transmises en même temps, ce qui permet la communication entre stations de base 2 sur la sous-porteuse nommée F_{MANET} (ou sur l'ensemble des sous-porteuses nommé F_{MANET}) selon le protocole MANET pendant le temps correspondant aux sous-trames ABS allouées aux communications MANET.

### Allocation dynamique des trames ABS

Le standard 3GPP permet de configurer les sous-trames ABS soit par configuration, soit via le lien X2.

Dans le cadre d'un réseau MANET selon l'invention, les périodes des sous-trames ABS dévolues à ce réseau doivent être communes à l'ensemble des stations de base 2. Ceci impose donc que la configuration de base des sous-trames ABS soit définie de manière commune entre les stations dans une phase de configuration préalable du réseau comme décrit ci-dessus.

En complément, il est possible que des sous-trames ABS complémentaires soient allouées et éventuellement créées (à la place de sous-trames LTE), pour augmenter uniquement la capacité de transit MANET local entre deux (ou plus) stations de base, nommé ci-après groupe de stations de base, au détriment toutefois de leur capacité d'accès LTE.

Pour augmenter cette capacité de transit local, deux cas sont à distinguer:
- soit F_{MANET} est une bande de fréquence disjointe des sous-porteuses des ensembles de sous-porteuses affectés aux stations de base 2 du groupe, auquel cas, les stations de base configurent localement leurs trames ABS complémentaires pour ce transit et opèrent vis-à-vis de ces sous-trames additionnelles de la même façon que pour les sous-trames ABS initialement réservées pour les communications MANET ;
- soit F_{MANET} n'est pas disjointe des sous-porteuses des ensembles de sous-porteuses affectés à ces stations de base 2 ; dans ce cas il est nécessaire que les stations de base en voisinage du groupe de stations de base soient également averties que de nouvelles sous-trames changent de statut et deviennent « ABS » : en effet, dans ces sous-trames, les stations de base adjacentes ne doivent pas communiquer avec les terminaux qui leur sont rattachés sous peine de brouiller les sous-trames ABS contenant les données MANET.

L'augmentation ou la diminution des sous-trames ABS passe par une allocation dynamique gérée par le bloc X2 28, utilisant, dans son interface avec le bloc LTE 23, le protocole X2 implémenté au-dessus des sous-trames statiquement définies, pour définir les sous-trames ABS d'extension. Ce protocole d'allocation s'étend à toutes les stations de base du groupe ainsi qu'à leur voisinage à 1 bond.

En cas de scission du réseau MANET impliquant la scission du groupe, ces sous-trames ABS supplémentaires se retrouvent utilisables par chacun des sous-groupes. Ces sous-trames peuvent notamment être libérées.

En cas de fusion du réseau MANET impliquant la fusion des sous-groupes, le dialogue via MANET mettant en oeuvre les fonctions du protocole X2 est rétabli entre les noeuds adjacents et les sous-trames ABS renégociées.

### Entrée tardive

L'entrée tardive dans le réseau 1 d'une station de base 2 se fait par l'intermédiaire de la forme d'onde MANET, le commutateur 22 est piloté par le bloc de synchronisation 26 pour interfacer le bloc MANET 25 et l'unité RF 21. Les opérations suivantes sont mises en oeuvre :
- détection, par le bloc MANET 25, d'une balise de synchronisation dans les données MANET reçues et détermination par le bloc de synchronisation 26 d'un motif de synchronisation fonction de ladite balise détectée;
- attente, par le bloc de synchronisation 26, d'un temps de décalage temporel prédéfini (égal au temps estimé de démarrage du bloc LTE 23) permettant de pré-synchroniser le bloc LTE 23 de manière à ce qu'il commence l'émission d'une trame LTE en respectant la position prédéfinie du motif de synchronisation LTE dans une sous-trame ABS allouée aux communications MANET ;
- asservissement de la synchronisation du bloc LTE 23 sur la synchronisation du réseau MANET (i.e. l'horloge interne du LTE est asservi sur cette synchronisation) pour éviter les dérives entre l'allocation réservée aux communications MANET d'après la synchronisation MANET et les trames ABS allouées aux communications MANET.

Ce processus d'acquisition et de synchronisation est exécuté de manière périodique.

La prise en compte par chacun des stations de base voisines d'une nouvelle station de base 2 est effectuée par les opérations suivantes mises en oeuvre dans chacune des stations de base voisines :
- détection d'une nouvelle adresse IP MANET indiquée dans les données MANET reçues ;
- établissement d'un dialogue entre blocs X2 28 des stations voisines permettant de partager le spectre dynamiquement ;
- lecture dans la table de correspondance d'adresses de l'adresse IP LTE correspondant à cette nouvelle adresse IP MANET ;
- établissement d'un lien conforme au protocole X2/IPSEC entre le bloc X2 28 et le bloc LTE 23 de la station, pour indiquer au bloc LTE l'ensemble de sous-porteuses affecté à la station et aux stations voisines, suite au partage dynamique ;
- échange périodique des « Physical Radio Blocks » entre stations de base 2 voisines via le dialogue entre les proxys X2 28 mis en oeuvre sur le réseau MANET, pour contrôler localement l'usage du spectre par le eNodeB.

La solution ici proposée permet de mailler un réseau LTE au niveau des stations de base (on notera que le maillage LTE peut aussi dans un mode de réalisation intégrer des terminaux utilisateurs) sans besoin d'intégration de plusieurs équipements radiofréquence (ici une unique unité RF est utilisée pour la mise en réseau MANET et la mise en réseau LTE) au niveau d'un noeud de communication. Cette disposition apporte des avantages significatifs en termes d'encombrement, aussi bien de l'équipement radio que du système antennaire, et également de coût récurrent pour la production de ces produits. La technologie LTE n'est bien sûr qu'un exemple et tout type de technologie de communications cellulaires peut être utilisé pour mettre en oeuvre l'invention.

Cette approche permet de conserver les atouts des technologies mobile 4G (très haut débit, couche PHY très performante basée sur une combinaison OFDMA / SC-FDMA, QoS, ...) tout en ajoutant une fonctionnalité ad hoc ou de relayage.

Dans un exemple d'illustration des services mis en oeuvre dans un réseau 1 de stations de base selon l'invention, en référence à la figure 1, des données à transmettre sont générées par le poste de travail 1 nommé PC1, local à la station de base 2 nommée eNB1, puis émises en communication MANET par l'eNB1. Ces données MANET sont reçues par la station de base 2 voisine, nommée eNB3, puis relayées par communication LTE vers le terminal utilisateur LTE 3, qui est attaché à la station eNB3 et est destinataire des données.

Dans un autre exemple, en référence à la figure 1, des données à transmettre à un poste de travail 4, nommé PC4 et local à la station de base 2 nommée eNB4, sont générées par le poste de travail 1 nommé PC1, local à la station de base 2 nommée eNB1, puis sont émises en communication MANET par l'eNB1. Ces données MANET sont reçues par la station de base 2 voisine, nommée eNB3, puis relayées par communication LTE vers l'eNB4, qui les remet au poste de travail PC4.

Ci-dessous a été décrit le maillage par réseau MANET de stations de base LTE.

Dans un mode de réalisation, le réseau MANET peut en outre comprendre, comme noeud(s) supplémentaire(s), un ou des terminaux utilisateurs LTE parmi les terminaux utilisateurs 3.

Un tel terminal utilisateur comprend une antenne radio fréquence adaptée pour émettre des signaux radiofréquence et est adapté pour mettre en oeuvre avec des stations de base 2, des communications radiofréquences conformes au protocole LTE pendant les sous-trames d'une trame LTE autres que les sous-trames dédiées aux communications MANET. Il est en outre adapté pour mettre en oeuvre, pendant la ou les sous-trames ABS dédiées aux communications MANET, des communications conformes au protocole MANET avec d'autres noeuds du réseau MANET (stations de base ou terminaux utilisateurs).

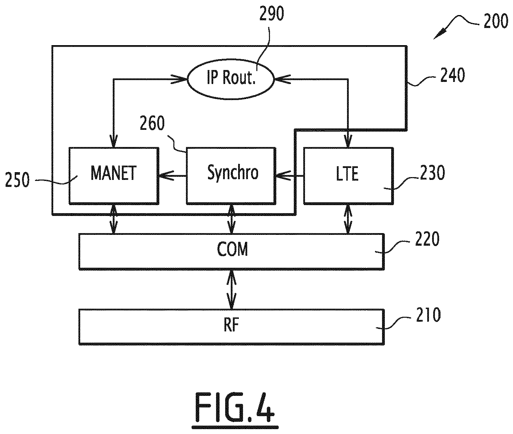

Un tel terminal utilisateur comprend ainsi dans un mode de réalisation, en référence à la figure 4, un bloc de traitement 200 représenté en figure 4 adapté pour traiter des signaux radiofréquence reçus par l'antenne et pour traiter des signaux avant de les fournir à l'antenne en vue de leur émission radiofréquence.

Le bloc de traitement 200 d'un tel terminal utilisateur comprend une unité radiofréquence RF 210, un commutateur 220, un bloc LTE 230 et un module de traitement 240.

Le module de traitement 240 comprend un routeur IP 290, un bloc LTE 230, un bloc de synchronisation 260 et un bloc MANET 250.

Le bloc LTE 23 et le bloc MANET 25 sont identifiés chacun par une adresse IP respective.

Le fonctionnement de l'unité radiofréquence RF 210, du commutateur 220, du routeur IP 290 et du bloc MANET 250 est similaire respectivement à celui de l'unité radiofréquence RF 21, du commutateur 22, du routeur IP 29 et du bloc MANET 25 décrits ci-dessus.

Il n'y a pas dans le terminal utilisateur de blocs correspondant à l'interface d'accès LTE 27, ni au proxy X2 28.

Le fonctionnement du bloc LTE 230 correspond à celui du bloc LTE 23, si ce n'est que la partie du protocole LTE qui y est mise en oeuvre est celle relative au terminal utilisateur (et non celle relative à la station de base) et qu'il n'y a pas de d'échanges conformes au protocole X2 mis en oeuvre par le bloc LTE.

En outre, dans le cas d'un terminal radio, dans un mode de réalisation, la synchronisation telle que pilotée par le bloc de synchronisation 260 pour rythmer les blocs MANET 250, LTE 230 et le commutateur 220 est acquise par le bloc de synchronisation 260 à partir de la trame LTE envoyée par la station de base 2 à laquelle le terminal utilisateur est attaché conformément au protocole LTE (et non via une balise dans les données MANET).

Comme dans le cas de la station de base, une seule unité RF peut être utilisée par un tel terminal radio pour réaliser successivement les radiocommunications LTE et les radiocommunications MANET.

## Revendications

1. Station de base (2) d'un réseau cellulaire comprenant des moyens d'émission et de réception radiofréquence (21) et adaptée pour établir, via lesdits moyens d'émission/réception radiofréquence, des connexions sur des canaux radiofréquences montants et descendants, en mettant en oeuvre un premier protocole de communication radio, avec des terminaux utilisateurs localisés au sein d'une cellule radio associée à la station de base ;
ladite station de base étant adaptée pour échanger, conformément au premier protocole radio, des trames de données avec des terminaux utilisateurs sur des canaux radio descendants et/ou montants, après y avoir inséré au moins une sous-trame vide, et
ladite station de base étant **caractérisée en ce qu'**elle est adaptée pour synchroniser l'occurrence desdites sous-trames vides avec celle des sous-trames vides insérées par les autres stations de base du réseau cellulaire, et pour pendant l'occurrence des sous-trames vides, communiquer, selon un deuxième protocole radio, via lesdits moyens d'émission/réception, avec au moins une station de base voisine, ledit deuxième protocole mis en oeuvre par ladite station de base étant distinct du premier protocole radio mis en oeuvre par ladite station de base ;
le premier protocole radio est un protocole de type LTE, et les sous-trames vides sont des sous-trames de type « Almost Blanked Subframe » définies par configuration de la stations de base ; et
le deuxième protocole est un protocole de type MANET.

2. Station de base (2) selon la revendication 1, adaptée pour, pendant l'occurrence des sous-trames vides, communiquer, via lesdits moyens d'émission/réception, avec plusieurs stations de base voisines selon le deuxième protocole radio sur un canal radiofréquence commun.

3. Station de base (2) selon la revendication 1 ou 2, adaptée pour utiliser un canal radiofréquence commun pour communiquer selon lesdits premier et deuxième protocoles.

4. Station de base (2) selon l'une des revendications précédentes, adaptées pour :
- recevoir, via le deuxième protocole, des données indiquant au moins un événement parmi l'apparition ou la disparition d'une station de base voisine, une demande ou une modification d'attribution d'un canal radiofréquence utilisé par le premier protocole, et pour:
- diffuser, via le deuxième protocole, l'indication de cet événement sur le canal radiofréquence commun vers les stations de base voisines, pendant l'occurrence de sous-trame(s) vide(s), et/ou
- modifier, en fonction dudit événement, au moins un des canaux ascendants ou descendants mis en oeuvre par la station de base pour la communication avec les terminaux selon le premier protocole.

5. Station de base (2) selon l'une quelconque des revendications précédentes, comprenant une horloge interne, ladite station de base étant adaptée pour, dans une phase de démarrage, détecter sur le canal radio commun utilisé pour le deuxième protocole, au moins une balise de synchronisation, pour synchroniser, en fonction d'au moins ladite balise de synchronisation détectée, l'instant d'émission des trames émises selon le premier protocole et/ou la durée de cycle de ladite horloge interne.

6. Procédé de traitement dans une station de base (2) d'un réseau cellulaire comprenant des moyens d'émission et de réception radiofréquence et adaptée pour établir, via lesdits moyens d'émission/réception radiofréquence, des connexions sur des canaux radiofréquences montants et descendants, en mettant en oeuvre un premier protocole de communication radio, avec des terminaux utilisateurs localisés au sein d'une cellule radio associée à la station de base ; ledit procédé comprenant les étapes suivantes mises en oeuvre par la station de base :
- échanger, conformément au premier protocole radio, des trames de données avec des terminaux utilisateurs sur les canaux radio montant et/ou descendants, après avoir inséré au moins une sous-trame vide au sein de chaque trame, et
ledit procédé étant **caractérisé en ce qu'**il comprend les étapes, mises en oeuvre par ladite station de base, de,
- synchroniser l'occurrence desdites sous-trames vides avec celle des sous-trames vides insérées par les autres stations de base du réseau cellulaire ;
- pendant l'occurrence des sous-trames vides, communiquer, selon un deuxième protocole radio, via lesdits moyens d'émission/réception, avec au moins une station de base voisine, ledit deuxième protocole mis en oeuvre par ladite station de base étant distinct du premier protocole radio mis en oeuvre par ladite station de base ;
- le premier protocole radio est un protocole de type LTE, et les sous-trames vides sont des sous-trames de type « Almost Blanked Subframe » définies par configuration de la station de base ; et
- le deuxième protocole est un protocole de type MANET.

7. Terminal utilisateur (3) d'un réseau cellulaire comprenant des moyens d'émission et de réception radiofréquence (210) et adapté pour établir, via lesdits moyens d'émission/réception radiofréquence (210), une connexion avec au moins une station de base (2) sur des canaux radiofréquences en mettant en oeuvre un premier protocole de communication radio ;
ledit terminal utilisateur étant adapté pour échanger, conformément au premier protocole radio, des données avec au moins ladite la station de base sur les canaux radiofréquences conformément à une structure de trame préétablie dans laquelle au moins une sous-trame vide fixée est réservée et interdite à la transmission de données selon le premier protocole,
ledit terminal utilisateur étant **caractérisé en ce qu'**il est adapté pour, pendant l'occurrence des sous-trames vides, communiquer, selon un deuxième protocole radio, via lesdits moyens d'émission/réception, avec au moins un noeud émetteur/récepteur radiofréquence voisin, ledit deuxième protocole mis en oeuvre par ledit terminal utilisateur étant distinct du premier protocole radio mis en oeuvre par ledit terminal utilisateur ;
- le premier protocole radio est un protocole de type LTE, et les sous-trames vides sont des sous-trames de type « Almost Blanked Subframe » définies par configuration ; et
- le deuxième protocole est un protocole de type MANET.

8. Terminal utilisateur selon la revendication 7, adapté pour synchroniser ses communications selon le deuxième protocole en fonction des occurrences des trames échangées selon le premier protocole.

## Patentansprüche

1. Basisstation (2) eines Mobilfunknetzes, umfassend Hochfrequenz-Sende- und
- Empfangseinrichtungen (21) und das angepasst ist, um über die Hochfrequenz-Sende- und -Empfangseinrichtungen Verbindungen auf Uplink- und Downlink-Hochfrequenzkanälen herzustellen, indem sie ein erstes Funkkommunikationsprotokoll implementiert, mit Benutzerendgeräten, die sich innerhalb einer Funkzelle befinden, die mit der Basisstation assoziiert ist;
wobei die Basisstation angepasst ist, um gemäß dem ersten Funkprotokoll Datenframes mit Benutzerendgeräten auf Downlink- und/oder Uplink-Funkkanälen auszutauschen, nachdem sie mindestens ein leeres Teilframe in diese eingefügt hat, und
wobei die Basisstation **dadurch gekennzeichnet ist, dass** sie angepasst ist, um das Auftreten der leeren Teilframes mit dem Auftreten der von den anderen Basisstationen des Mobilfunknetzes eingefügten leeren Teilframes zu synchronisieren und während des Auftretens der leeren Teilframes gemäß einem zweiten Funkprotokoll über die Sende-/Empfangseinrichtungen mit mindestens einer benachbarten Basisstation zu kommunizieren, wobei sich das von der Basisstation implementierte zweite Protokoll von dem Funkprotokoll unterscheidet, das von der Basisstation implementiert wird;
das erste Funkprotokoll ein LTE-ähnliches Protokoll ist und die leeren Teilframes Teilframes vom Typ "Almost Blanked Subframe" sind, die durch Konfiguration der Basisstation definiert sind; und
das zweite Protokoll ist ein Protokoll vom Typ MANET ist.

2. Basisstation (2) nach Anspruch 1, die angepasst ist, um während des Auftretens der leeren Teilframes über die Sende-/Empfangseinrichtungen mit mehreren benachbarten Basisstationen gemäß dem zweiten Funkprotokoll auf einem gemeinsamen Funkfrequenzkanal zu kommunizieren.

3. Basisstation (2) nach Anspruch 1 oder 2, die angepasst ist, um einen gemeinsamen Hochfrequenzkanal für die Kommunikation gemäß dem ersten und zweiten Protokoll zu verwenden.

4. Basisstation (2) nach einem der vorherigen Ansprüche, die zu Folgendem angepasst ist:
- Empfangen, über das zweite Protokoll, von Daten, die mindestens ein Ereignis von einem Erscheinen oder Verschwinden einer benachbarten Basisstation, einer Anfrage oder einer Änderung der Zuweisung eines von dem ersten Protokoll verwendeten Funkfrequenzkanals angeben, und
- Verteilen, über das zweite Protokoll, der Angabe dieses Ereignisses auf dem gemeinsamen Funkfrequenzkanal zu den benachbarten Basisstationen während des Auftretens des/der leeren Teilframes, und/oder
- Ändern, abhängig von dem Ereignis, mindestens eines von dem Uplink- oder Downlink-Kanal, die von der Basisstation für die Kommunikation mit den Endgeräten gemäß dem ersten Protokoll implementiert werden.

5. Basisstation (2) nach einem der vorherigen Ansprüche, umfassend einen internen Zeitgeber, wobei die Basisstation angepasst ist, um in einer Anfangsphase auf dem gemeinsamen Funkkanal, der für das zweite Verfahren verwendet wird, mindestens eine Synchronisationsbake zu erfassen, um abhängig von mindestens der erfassten Synchronisationsbake den Sendezeitpunkt der nach dem ersten Protokoll gesendeten Frames und/oder die Zyklusdauer des internen Zeitgebers zu synchronisieren.

6. Verarbeitungsverfahren in einer Basisstation (2) eines Mobilfunknetzes, umfassend Hochfrequenz-Sende- und -Empfangseinrichtungen und das angepasst ist, um über die Hochfrequenz-Sende- und -Empfangseinrichtungen Verbindungen auf Uplink- und Downlink-Hochfrequenzkanälen herzustellen, indem sie ein erstes Funkkommunikationsprotokoll implementiert, mit Benutzerendgeräten, die sich innerhalb einer Funkzelle befinden, die mit der Basisstation assoziiert ist; das Verfahren umfassend die folgenden Schritte, die von der Basisstation implementiert werden:
- Austauschen, gemäß dem ersten Funkprotokoll Datenframes mit Benutzerendgeräten auf Downlink- und/oder Uplink-Funkkanälen, nachdem mindestens ein leerer Teilrahmen innerhalb jedes Frames eingefügt wurde, und
wobei das Verfahren **dadurch gekennzeichnet ist, dass** es die folgenden Schritte umfasst, die von der Basisstation implementiert werden:
- synchronisieren des Auftretens der leeren Subframes mit dem Auftreten der leeren Subframes, die von den anderen Basisstationen des Mobilfunknetzes eingefügt werden;
- während des Auftretens der leeren Teilframes, Kommunizieren, gemäß einem zweiten Funkprotokoll, über die Sende-/Empfangseinrichtungen mit mindestens einer benachbarten Basisstation, wobei sich das von der Basisstation implementierte zweite Protokoll von dem Funkprotokoll unterscheidet, das von der Basisstation implementiert wird;
- das erste Funkprotokoll ein LTE-ähnliches Protokoll ist und die leeren Teilframes Teilframes vom Typ "Almost Blanked Subframe" sind, die durch Konfiguration der Basisstation definiert sind; und
- das zweite Protokoll ist ein Protokoll vom Typ MANET ist.

7. Benutzerendgerät (3) eines Mobilfunknetzes, umfassend Hochfrequenz-Sende- und -Empfangseinrichtungen (210) und das angepasst ist, um über die Hochfrequenz-Sende- und -Empfangseinrichtungen (210) eine Verbindung mit mindestens einer Basisstation (2) auf Hochfrequenzkanälen herzustellen, indem es ein erstes Funkkommunikationsprotokoll implementiert;
wobei das Benutzerendgerät angepasst ist, um gemäß dem ersten Funkprotokoll Daten mit mindestens der Basisstation auf den Funkfrequenzkanälen gemäß einer voreingestellten Framestruktur auszutauschen, in der mindestens ein festgelegtes leeres Teilframes für die Datenübertragung gemäß dem ersten Protokoll reserviert und gesperrt ist,
wobei das Benutzerendgerät **dadurch gekennzeichnet ist, dass** es angepasst ist, um während des Auftretens der leeren Teilframes gemäß einem zweiten Funkprotokoll über die Sende-/Empfangseinrichtungen mit mindestens einem benachbarten Hochfrequenz-Sende-/Empfangsknoten zu kommunizieren, wobei sich das von dem Benutzerendgerät implementierte zweite Protokoll von dem Funkprotokoll unterscheidet, das von dem Benutzerendgerät implementiert wird;
- das erste Funkprotokoll ein LTE-ähnliches Protokoll ist und die leeren Teilframes Teilframes vom Typ "Almost Blanked Subframe" sind, die durch Konfiguration definiert sind; und
- das zweite Protokoll ist ein Protokoll vom Typ MANET ist.

8. Benutzerendgerät nach Anspruch 7, das angepasst ist, um seine Kommunikation nach dem zweiten Protokoll abhängig vom Auftreten der nach dem ersten Protokoll ausgetauschten Frames zu synchronisieren.

## Claims

1. A base station (2) of a cellular network comprising radiofrequency transmission and reception means (21) and suitable for establishing, via said radio transmission/reception means, connections on uplink and downlink radiofrequency channels, implementing a first radio communication protocol, with user terminals located within a radio cell associated with the base station;
said base station being suitable for exchanging, according to the first radio protocol, data frames with user terminals on downlink and/or uplink radio channels, after having inserted at least one empty subframe therein, and
said base station being **characterized in that** it is suitable for synchronizing the occurrence of said empty subframes with that of the empty sub-frames inserted by the other base stations of the cellular network, and in order, during the occurrence of the empty subframes, to communicate, according to a second radio protocol, via said transmission/reception means, with at least one neighboring base station, said second protocol implemented by said base station being separate from the first radio protocol implemented by said base station;
the first radio protocol is a protocol of the LTE type, and the empty subframes are subframes of the "Almost Blanked Subframe" type defined by configuration of the base stations; and
the second protocol is a protocol of the MANET type.

2. The base station (2) according to claim 1, suitable for, during the occurrence of the empty subframes, communicating, via said transmission/reception means, with several neighboring base stations according to the second radio protocol on a shared radiofrequency channel.

3. The base station (2) according to claim 1 or 2, suitable for using a shared radiofrequency channel to communicate according to said first and second protocols.

4. The base station (2) according to one of the preceding claims, suitable for:
- receiving, via the second protocol, data indicating at least one event from among the appearance or disappearance of a neighboring base station, a request for modification for assignment of a radiofrequency channel used by the first protocol, and to:
- broadcasting, via the second protocol, the indication of this event on the shared radiofrequency channel to the neighboring base stations, during the occurrence of empty subframe(s), and/or
- modifying, based on said event, at least one of the uplink or downlink channels implemented by the base station for communication with the terminals according to the first protocol.

5. The base station (2) according to any one of the preceding claims, comprising an internal clock, said base station being suitable for, in a startup phase, detecting, on the shared radio channel used for the second protocol, at least one synchronization beacon, to synchronize, as a function of at least said detected synchronization beacon, the transmission moment of the frames transmitted according to the first protocol and/or the cycle length of said internal clock.

6. A processing method in a base station (2) of a cellular network comprising radiofrequency transmission and reception means and suitable for establishing, via said radio transmission/reception means, connections on uplink and downlink radiofrequency channels, implementing a first radio communication protocol, with user terminals located within a radio cell associated with the base station; said method comprising the following steps implemented by the base station:
- exchanging, according to the first radio protocol, data frames with user terminals on uplink and/or downlink radio channels, after having inserted at least one empty subframe within each frame, and
said method being **characterized in that** it comprises the following steps, carried out by said base station:
- synchronizing the occurrence of said empty subframes with that of the empty subframes inserted by the other base stations of the cellular network;
- during the occurrence of the empty subframes, communicating, according to a second radio protocol, via said transmission/reception means, with at least one neighboring base station, said second protocol implemented by said base station being separate from the first radio protocol implemented by said base station;
the first radio protocol is a protocol of the LTE type, and the empty subframes are subframes of the "Almost Blanked Subframe" type defined by configuration of the base station; and
the second protocol is a protocol of the MANET type.

7. A user terminal (3) of a cellular network comprising radiofrequency transmission and reception means (210) and suitable for establishing, via said radio transmission/reception means (210), a connections with at least one base station (2) on radiofrequency channels by implementing a first radio communication protocol;
said user terminal being suitable for exchanging, according to the first radio protocol, data with at least said base station on the radiofrequency channels according to a preestablished frame structure in which at least one fixed empty subframe is reserved and prohibited for the transmission of data according to the first protocol,
said user terminal being **characterized in that** it is suitable for, during the occurrence of the empty subframes, communicating, according to a second radio protocol, via said transmission/reception means, with at least one neighboring transmitter/receiver node, said second protocol implemented by said user terminal being separate from the first radio protocol implemented by said user terminal;
the first radio protocol is a protocol of the LTE type, and the empty subframes are subframes of the "Almost Blanked Subframe" type defined by configuration; and
the second protocol is a protocol of the MANET type.

8. The user terminal according to claim 7, suitable for synchronizing its communications according to the second protocol as a function of the occurrences of frames exchanged according to the first protocol.
